# FASCICULE DE BREVET EUROPEEN

(11) **EP 4 186 785 B1**
(45) Date de publication et mention de la délivrance du brevet: **11.03.2026**
(21) Numéro de dépôt: 22206449.5
(22) Date de dépôt: 09.11.2022
(51) Int. Cl.: B64C 9/16, B64C 3/38, B64C 9/00, B64C 3/48

(54) **PILIER FLEXIBLE POUR UNE OSSATURE FLEXIBLE D'UNE GOUVERNE À GÉOMÉTRIE VARIABLE**
FLEXIBLER PFOSTEN FÜR EIN FLEXIBLES GERÜST EINER STEUERFLÄCHE MIT VARIABLER GEOMETRIE
FLEXIBLE PILLAR FOR A FLEXIBLE FRAMEWORK OF A VARIABLE GEOMETRY CONTROL SURFACE

(30) Priorité: 24.11.2021 FR 2112448
(43) Date de publication de la demande: 31.05.2023
(73) Titulaire: Airbus Operations SAS, 31060 Toulouse (FR)
(72) Inventeur: CALATAYUD, Cristobal, 92100 BOULOGNE BILLANCOURT (FR); TRARIEUX, Benjamin, 31060 TOULOUSE (FR); ALBERT, Brice, 31060 TOULOUSE (FR); GOUPIL, Frédéric, 31060 TOULOUSE (FR)
(74) Mandataire: Gevers & Orès

(56) Documents cités:
- US-A- 1 842 736
- US-A- 6 152 405
- US-A1- 2010 259 046
- US-A1- 2014 302 261
- US-A9- 2007 152 106
- US-B1- 6 276 641
- ELMENHORST: "Lagern und Entkoppeln", 1 May 2020 (2020-05-01), pages 1 - 56, XP055927932, Retrieved from the Internet <URL:https://www.elmenhorst.de/xchange/kataloge/katalog_lagern_entkoppeln_2020.pdf> [retrieved on 20220603]

## Description

### Domaine technique

La présente invention concerne un pilier flexible pour une ossature flexible, en particulier, destinée à être agencée dans une gouverne à géométrie variable, par exemple un aileron déformable d'un aéronef.

### État de la technique

En aéronautique des surfaces mobiles sont utilisées, généralement sur les ailes et la queue d'un aéronef, pour faire varier la portance et la trainée. En particulier, les ailerons sont des gouvernes aérodynamiques situées sur le bord de fuite des ailes d'un aéronef. Ils sont articulés en pivot par rapport aux ailes de manière à pouvoir être déplacés en rotation et ainsi faire varier l'exposition de leurs surfaces extérieures aux flux d'air. Par exemple, les ailerons des deux ailes sont généralement déplacés en opposition (l'un est pivoté vers le haut et l'autre vers le bas) pour produire un moment de roulis.

Pour ce faire, il est connu d'utiliser des gouvernes rigides qui sont pivotées autour de leur axe de rotation par un actionneur afin de leur faire prendre des positions souhaitées. Leur rigidité permet notamment aux gouvernes de supporter des efforts aérodynamiques auxquels elles sont destinées à être soumises. Mais de telles gouvernes peuvent être difficiles et coûteuses à mettre en œuvre. Une autre solution consiste à utiliser des gouvernes déformables, c'est-à-dire des gouvernes dont le déplacement est réalisé via la déformation, par un actionneur, d'au moins une partie de leur structure. Néanmoins, les structures existantes ne permettent pas d'obtenir des gouvernes qui soient à la fois facilement déformables et suffisamment rigides pour supporter des efforts aérodynamiques importants.

On connaît, par les documents US 2014/302261 A1, US 6 276 641 B1, US 6 152 405 A et US 2010/259046 A1, des gouvernes à géométrie variable comprenant des éléments de renfort.

Toutefois, ces solutions ne sont donc pas complètement satisfaisantes.

### Exposé de l'invention

La présente invention a pour objet de proposer une solution permettant de remédier à l'inconvénient précité.

Pour ce faire, elle concerne un pilier flexible pour une ossature flexible destinée à être agencée sur une gouverne à géométrie variable pourvue d'une peau supérieure et d'une peau inférieure.

Selon l'invention, le pilier flexible comporte au moins un élément élastique de forme allongée dans une direction d'un axe longitudinal. Le pilier flexible est configuré pour être agencé entre la peau supérieure et la peau inférieure de sorte que l'élément élastique soit apte à être fixé à la peau supérieure à une première extrémité du pilier flexible et soit apte à être fixé à la peau inférieure à une deuxième extrémité du pilier flexible. Le pilier flexible présentant une rigidité en compression et en traction selon l'axe longitudinal (X-X) qui est supérieure à une rigidité en cisaillement du pilier flexible selon un axe transversal (Y-Y) dudit pilier flexible (1).

Ainsi, grâce à l'invention, on dispose d'un support présentant une direction longitudinale qui est capable de transmettre des efforts entre ses extrémités selon cette direction longitudinale, et ce en se déformant peu selon cette direction longitudinale et en étant apte à se déformer facilement dans une direction transversale à ladite direction longitudinale.

Avantageusement, l'élément élastique du pilier flexible comprend au moins un premier segment élastique à sa première extrémité, un deuxième segment élastique à sa deuxième extrémité et une âme rigide agencée entre le premier segment élastique et le deuxième segment élastique.

En outre, au moins le premier segment élastique et/ou le deuxième segment élastique est constitué d'un matériau élastique incompressible.

De plus, au moins le premier segment élastique et/ou le deuxième segment élastique comprend au moins deux tronçons élastiques et au moins une plaque métallique empilés selon l'axe longitudinal, la ou les plaques métalliques étant intercalées entre deux tronçons élastiques.

Dans un mode de réalisation préféré, le pilier flexible présente une section transversale de forme carrée.

Dans un mode de réalisation particulier, le pilier flexible présente une section transversale de forme rectangulaire pourvue d'une longueur destinée à s'étendre selon la direction d'une envergure de la gouverne à géométrie variable sur laquelle il est destiné à être fixé.

La présente invention concerne également une ossature flexible pour une gouverne à géométrie variable.

Selon l'invention, l'ossature flexible comporte une pluralité de piliers flexibles, la pluralité de piliers flexibles étant destinée à être régulièrement répartie dans un espace interne de la gouverne à géométrie variable, l'espace interne étant délimité par la peau supérieure et la peau inférieure.

En outre, avantageusement, l'âme rigide de chacun des piliers flexibles comble une distance selon l'axe longitudinal entre le premier segment élastique et le deuxième segment élastique si le premier segment élastique et le deuxième segment élastique sont séparés d'une distance non nulle.

La présente invention concerne de plus une gouverne à géométrie variable pourvue d'une peau supérieure et d'une peau inférieure destinée à être agencée sur une aile d'un aéronef. Selon l'invention, la gouverne à géométrie variable comporte une ossature flexible agencée entre la peau supérieure et la peau inférieure.

La présente invention concerne en outre un aéronef équipé d'au moins une gouverne à géométrie variable, au moins sur l'une de ses ailes.

### Brève description des figures

Les figures annexées feront bien comprendre comment l'invention peut être réalisée. Sur ces figures, des références identiques désignent des éléments semblables.
La figure 1 est une vue en coupe longitudinale d'un pilier flexible dans un mode de réalisation préféré.
La figure 2 est une vue en coupe transversale d'une gouverne à géométrie variable comportant une ossature flexible selon un mode de réalisation particulier.
La figure 3 est une vue en coupe transversale d'une gouverne illustrant un exemple de déformation d'une gouverne à géométrie variable comportant une ossature flexible selon un mode de réalisation particulier.
La figure 4 est une vue en perspective d'une gouverne à géométrie variable comportant une ossature flexible selon un mode de réalisation particulier.
La figure 5 est une vue de dessus schématique d'une répartition des piliers flexibles d'une ossature flexible selon un mode de réalisation dans lequel les piliers flexibles présentent une section transversale de forme carrée.
La figure 6 est une vue de dessus schématique d'une répartition des piliers flexibles d'une ossature flexible selon un mode de réalisation particulier dans lequel les piliers flexibles présentent une section transversale de forme rectangulaire.
La figure 7 est une vue en perspective d'un aéronef équipé de gouvernes à géométrie variable sur ses ailes selon un mode de réalisation particulier.

### Description détaillée

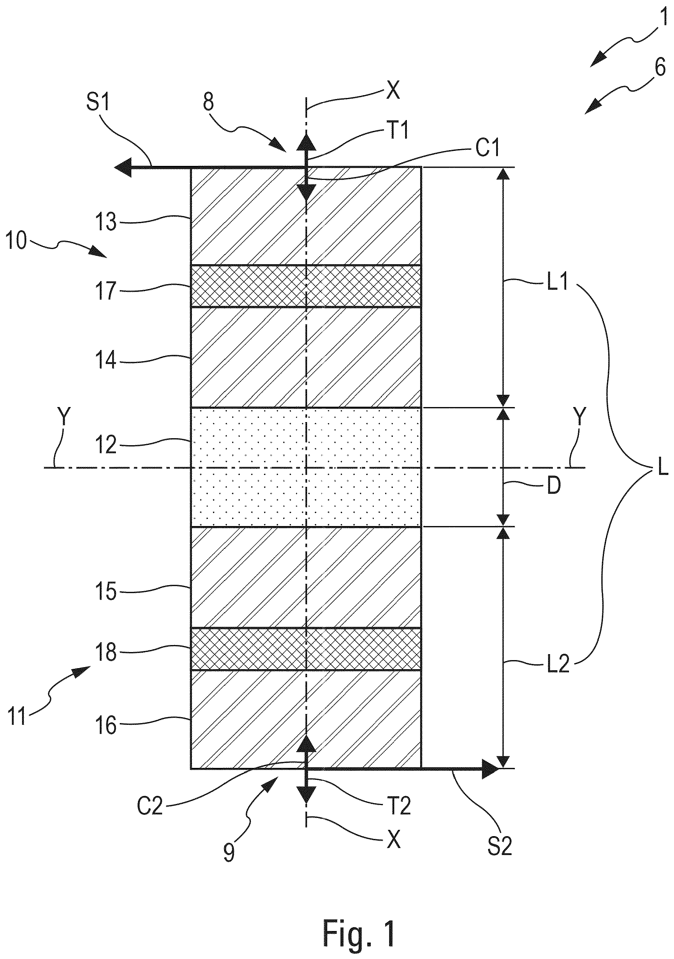

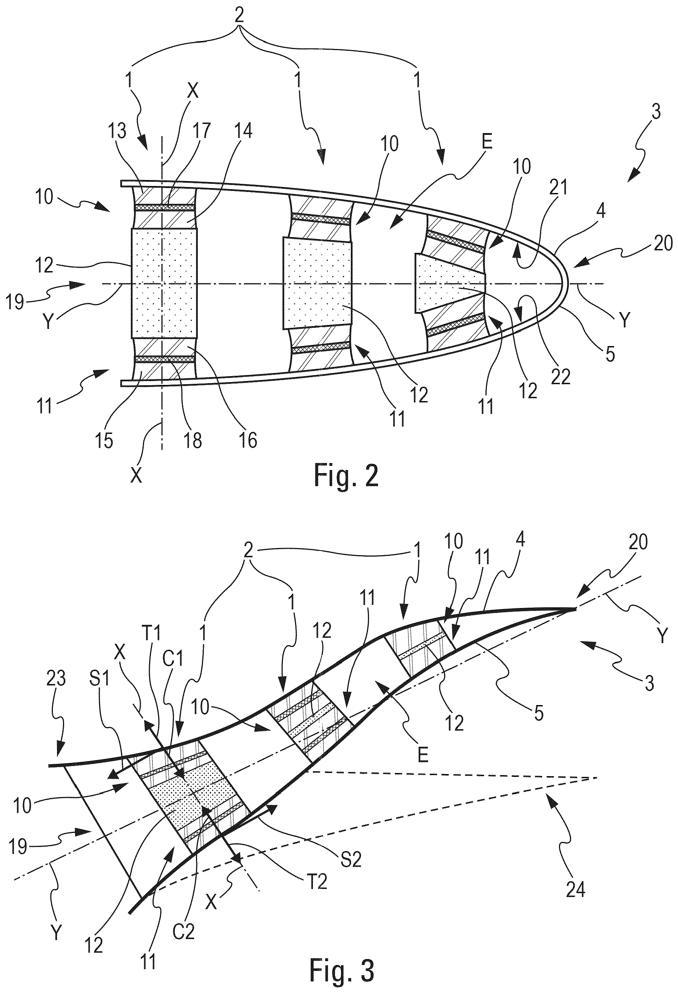

Le pilier flexible 1, selon l'invention et dont une forme de réalisation est représentée schématiquement sur la figure 1, est un pilier destiné à faire partie d'une ossature flexible 2 pour une gouverne à géométrie variable 3 (figure 2, figure 3 et figure 4).

On entend par « pilier » un support présentant un axe longitudinal, destiné à être agencé entre deux objets de manière à transmettre des efforts entre lesdits objets.

Par ailleurs, « une gouverne à géométrie variable » désigne un élément aérodynamique mobile tel qu'une gouverne d'un aéronef (généralement situé sur les ailes), dont la structure est conçue pour être déformable. Ainsi, il est possible, par exemple au moyen d'un actionneur, de déformer une telle gouverne de manière à faire varier sa forme ou son orientation. Cette déformation peut notamment remplacer un déplacement d'une gouverne rigide usuelle.

Dans un mode de réalisation préféré, la gouverne à géométrie variable 3 sur laquelle est destinée à être agencé le pilier flexible 1 comporte une peau supérieure 4 et une peau inférieure 5. Dans ce mode de réalisation, le pilier flexible 1, représenté sur la figure 1, comporte au moins un élément élastique 6 de forme allongée dans la direction d'un axe longitudinal X-X. L'élément élastique 6 présente au moins une première extrémité 8 selon l'axe longitudinal X-X apte à être fixée à la peau supérieure 4 et une deuxième extrémité 9 selon l'axe longitudinal X-X apte à être fixée à la peau inférieure 5.

Les extrémités 8 et 9 de l'élément élastique 6 peuvent être fixées, respectivement, à la peau supérieure 4 et à la peau inférieure 5 par collage ou tout autre moyen d'assemblage mécanique.

De plus, le pilier flexible 1 présente une rigidité en compression et en traction selon l'axe longitudinal X-X qui est supérieure à une rigidité en cisaillement du pilier flexible 1 selon un axe transversal Y-Y dudit pilier flexible 1. L'axe transversal Y-Y peut être orthogonal à l'axe longitudinal X-X, comme dans l'exemple de la figure 1. On entend par « rigidité », la capacité d'un corps à s'opposer à des déformations. Autrement dit, le pilier flexible 1 est configuré pour se déformer faiblement lorsqu'il est sollicité en compression ou en traction selon la direction de l'axe longitudinal X-X. En outre, le pilier flexible 1 est également configuré pour opposer une faible résistance lorsqu'il est sollicité en cisaillement, c'est-à-dire lorsqu'il est soumis à des efforts tranchants, à savoir des efforts dont au moins une composante est sensiblement orthogonale à l'axe longitudinal X-X.

Dans le mode de réalisation de la figure 1, le pilier flexible 1 est fixé au niveau des extrémités 8 et 9. Par conséquent, ce sont les surfaces d'extrémités dudit pilier flexible 1 au niveau de ces extrémités 8 et 9 qui sont destinées à être soumises à des sollicitations mécaniques extérieures, par exemple lors de la déformation de la gouverne à géométrie variable 3 tel que détaillé ci-après dans la description.

Ainsi, dans ce mode de réalisation, le pilier flexible 1 peut subir des sollicitations mécaniques extérieures induisant des efforts qui sont appliqués au niveau des extrémités 8 et 9. Ces sollicitations mécaniques extérieures subies par le pilier flexible 1 peuvent notamment se décomposer en efforts de compression, de traction et de cisaillement. Les efforts en compression sont orientés selon l'axe longitudinal X-X dans le sens se rapprochant de l'axe transversal Y-Y et représentés schématiquement par des flèches C1 et C2 (figure 1 et figure 3). Les efforts de traction sont orientés selon l'axe longitudinal X-X en s'éloignant de l'axe transversale Y-Y et représentés par des flèches T1 et T2 (figure 1 et figure 3). Les efforts de cisaillement, ou efforts tranchants, sont orientés orthogonalement à l'axe longitudinal X-X et représentés par les flèches S1 et S2 (figure 1 et figure 3).

De préférence, l'élément élastique 6 est fabriqué dans un matériau de type élastomère. Toutefois, il peut également être fabriqué dans d'autres matériaux dont les propriétés d'hyper-élasticité et de quasi-incompressibilité permettent d'obtenir le rapport entre la rigidité du pilier flexible 1 en compression/traction et la rigidité en cisaillement tel que décrit ci-dessus.

Dans un mode de réalisation privilégié, représenté sur la figure 1, l'élément élastique 6 du pilier flexible 1 comprend au moins un segment élastique 10 et un segment élastique 11. Le segment élastique 10 et le segment élastique 11 sont agencés empilés selon l'axe longitudinal X-X. De plus, le pilier flexible 1 peut comporter une âme rigide 12 agencée entre le segment élastique 10 et le segment élastique 11. Les segments élastiques 10 et 11 et l'âme rigide 12 sont agencés empilés selon la direction de l'axe longitudinal X-X. Ils peuvent être fixés ensemble par des moyens de fixation, par exemple, par collage.

En outre, au moins le segment élastique 10 et/ou le segment élastique 11 peut être constitué d'un matériau élastique incompressible.

De préférence, les segments élastiques 10 et 11 sont fabriqués dans un matériau de type élastomère. En particulier, il peut s'agir d'un matériau de type élastomère vulcanisé. L'âme rigide 12 est fabriquée dans un matériau rigide. Par exemple, elle peut être fabriquée en matériau composite carbone ou en matériau isotrope comme un matériau métallique ou plastique.

Dans une réalisation de ce mode de réalisation, les segments élastiques 10 et 11 et l'âme rigide 12 présentent des formes en parallélépipèdes rectangles allongés selon la direction de l'axe longitudinal X-X. En particulier, ils sont configurés pour être fixés ensemble de sorte que les interfaces entre les segments 10 et 11 et l'âme rigide 12 soient orthogonales à l'axe longitudinal X-X du pilier flexible 1. De préférence, les segments élastiques 10 et 11 présentent les mêmes dimensions. En particulier, le segment élastique 10 peut présenter une longueur L1 selon l'axe longitudinal X-X qui est égale à une longueur L2 selon l'axe longitudinal X-X du segment élastique 11. Par ailleurs, les segments élastiques 10 et 11 peuvent être fabriqués dans le même matériau.

Dans une réalisation particulière de ce mode de réalisation, l'âme rigide 12 et/ou les segments élastiques 10 et 11 peuvent présenter des formes de solides à six faces dont les surfaces d'extrémité ne sont pas parallèles. Ainsi, les interfaces entre les segments élastiques 10 et 11 et l'âme rigide 12 présentent un angle non droit avec l'axe longitudinal X-X. Cela permet, par exemple, d'adapter la forme du pilier flexible 1 à des configurations particulières de la gouverne à géométrie variable 3 sur laquelle il est destiné à être agencé. Par exemple, dans la figure 2, les deux âmes 12 à droite de la figure présentent des surfaces d'extrémité non parallèles.

Dans un mode de réalisation particulier, comme représenté sur la figure 1, les segments élastiques 10 et 11 comprennent chacun au moins deux tronçons élastiques empilés selon l'axe longitudinal X-X. En particulier, le segment élastique 10 comporte un tronçon élastique 13 et un tronçon élastique 14. De même, le segment élastique 11 comporte un tronçon élastique 15 et un tronçon élastique 16. De préférence, les tronçons élastiques 13, 14, 15 et 16 présentent les mêmes dimensions. De plus, les segments élastiques 10 et 11 comprennent chacun au moins une plaque métallique intercalée entre leurs tronçons élastiques. En particulier, le segment élastique 10 comporte une plaque métallique 17 intercalée entre les tronçons élastiques 13 et 14. De même, le segment élastique 11 comporte une plaque métallique 18 intercalée entre les tronçons élastiques 15 et 16. De préférence, les plaques métalliques 17 et 18 présentent les mêmes dimensions. Par ailleurs, elles peuvent être fabriquées dans le même matériau, par exemple en acier.

Dans une réalisation de ce mode de réalisation, les tronçons élastiques et les plaques métalliques sont agencés empilés selon l'axe longitudinal X-X de sorte que les interfaces entre les tronçons élastiques et les plaques métalliques soient orthogonales audit l'axe longitudinal X-X. Cela permet notamment d'augmenter la rigidité du pilier flexible 1 en compression et en traction selon son axe longitudinal X-X.

La composition des segments élastiques 10 et 11, telle que décrite ci-dessus, n'est pas limitative. En effet, ils peuvent comporter une pluralité de tronçons élastiques et de plaques métalliques agencés entre eux de manières variées (intercalées ou non, avec des interfaces orthogonales à l'axe longitudinal X-X ou non), par exemple pour ajuster la rigidité du pilier flexible 1 en compression et/ou en traction à des cas particuliers.

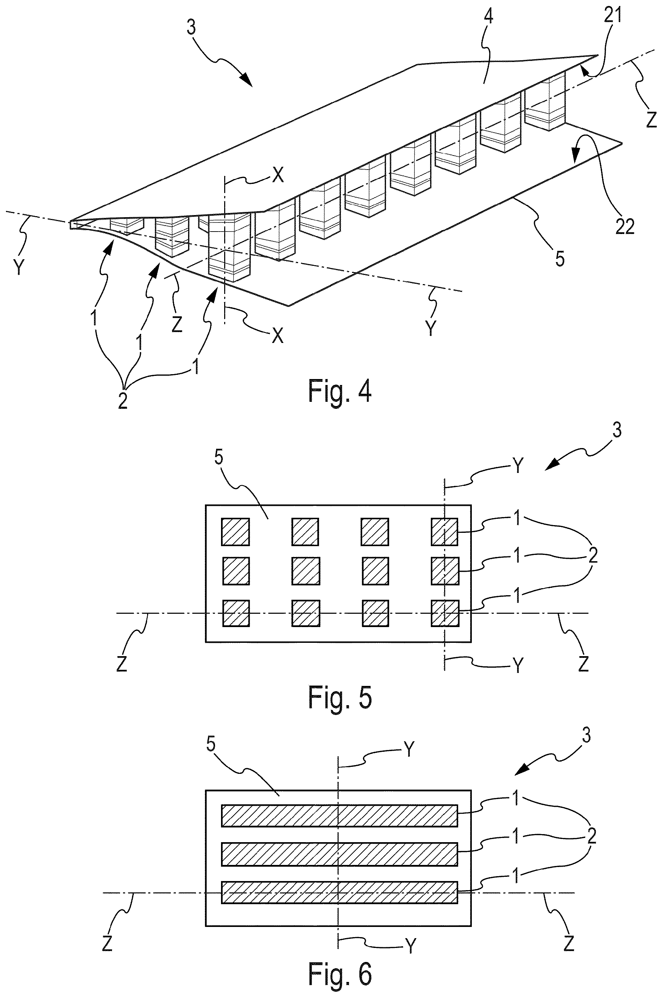

Dans un mode de réalisation, représenté sur la figure 1 et la figure 5, le pilier flexible 1 présente une section transversale de forme carrée. Dans ce mode de réalisation, les segments élastiques 10 et 11 et l'âme rigide 12 présentent également une section transversale carrée. Ainsi, le pilier flexible 1 présente une forme de cube ou de parallélépipède rectangle.

En outre, dans ce mode de réalisation, les longueurs L1 et L2 des segments élastiques 10 et 11 sont égales. De façon non limitative, les tronçons élastiques 13, 14, 15 et 16 peuvent présenter une épaisseur, à savoir une longueur selon l'axe longitudinal X-X, comprise entre 2 mm et 20 mm, de préférence une épaisseur de 5 mm. De plus, les plaques métalliques 17 et 18 peuvent présenter une épaisseur comprise entre 0,5 mm et 1,5 mm, de préférence une épaisseur de 1 mm.

Dans un mode de réalisation particulier, représenté schématiquement sur la figure 6, le pilier flexible 1 présente une section transversale de forme rectangulaire. De plus, la forme rectangulaire est pourvue d'une longueur destinée à s'étendre sur une envergure de la gouverne à géométrie variable 3 sur laquelle le pilier flexible 1 est destiné à être agencé. Dans ce cas, l'axe transversal Y-Y est orienté sensiblement perpendiculairement à la longueur de la section transversale rectangulaire du pilier flexible 1. Ainsi, le pilier flexible 1 est configuré pour présenter une faible rigidité en cisaillement (devant les rigidités en compression et en traction) et donc être facilement déformable selon cette direction.

Toutefois, les formes décrites ci-dessus pour le pilier flexible 1 ne sont pas limitatives. En effet, le pilier flexible 1 peut présenter des formes variées et complexes, par exemple avec une section transversale dont la forme varie le long dudit pilier flexible 1 selon l'axe longitudinal X-X.

Le pilier flexible 1 tel que décrit ci-dessus, est destiné à faire partie d'une ossature flexible 2 représentée de la figure 2 à la figure 6. L'ossature flexible 2 est, par exemple, destinée à être agencée sur une gouverne d'un aéronef.

Selon l'invention, l'ossature flexible 2 comporte une pluralité de piliers flexibles 1. De préférence, les piliers flexibles 1 de l'ossature flexible 2 sont espacés entre eux afin de former un maillage régulier. Ainsi, l'ossature flexible 2, destinée à être agencée dans un espace interne E de la gouverne à géométrie variable 3 délimité par la peau supérieure 4 et la peau inférieure 5, est apte à occuper ledit espace interne E de manière homogène.

Toutefois, dans des modes de réalisations particuliers, l'ossature flexible 2 peut comporter une pluralité de piliers flexibles 1 espacés entre eux afin de former un maillage irrégulier. Dans ce cas, l'ossature flexible 2 est configurée pour occuper l'espace interne E, dans lequel elle est destinée à être agencée, de manière hétérogène, à savoir avec des espaces irréguliers entre les piliers flexibles 1. Cela peut permettre d'obtenir des propriétés mécaniques, et notamment des propriétés élastiques, qui diffèrent d'un endroit à l'autre de l'ossature flexible 2. Par exemple, cela permet d'obtenir une rigidité plus importante dans des zones présentant une plus forte densité de piliers flexibles 1, et inversement d'obtenir une rigidité plus faible dans des zones présentant une plus faible densité de piliers flexibles 1.

Dans le mode de réalisation, représenté de la figure 2 à la figure 4, l'ossature flexible 2 comporte des piliers flexibles 1 identiques à l'exception de la forme de leur âme rigide 12. En effet, dans ce mode de réalisation, l'ossature 2 est destinée à être agencée dans un espace interne E de la gouverne à géométrie variable 3 qui est plus large à une extrémité 19 dite « ouverte » qu'à une autre extrémité 20 dite « fermée » près du bord de fuite. Ainsi, la longueur des piliers flexibles 1 selon l'axe longitudinal X-X doit être adaptée à la forme du profil de la gouverne à géométrie variable 3.

À cet effet, comme représenté sur la figure 1 et la figure 2, l'âme rigide 12 de chacun des piliers flexibles 1 comble une distance D selon l'axe longitudinal X-X entre le segment élastique 10 et le segment élastique 11. Dans le cas où la distance D séparant le segment élastique 10 et le segment élastique 11 est nulle, le pilier flexible 1 en question peut ne pas compoter d'âme rigide 12. Ainsi, comme dans l'exemple représenté sur la figure 2, tous les piliers flexibles 1 de l'ossature flexible 2 présentent une longueur L selon l'axe longitudinal X-X (figure 1), correspondant à la longueur L1 du segment élastique 10 additionnée à la longueur L2 du segment élastique 11, qui est la même. Dans ce mode de réalisation, seule la distance D comblée par l'âme rigide 12 peut varier d'un pilier flexible 1 à l'autre.

Par ailleurs, dans des modes de réalisation particuliers, certains piliers flexibles 1 de l'ossature flexible 2 peuvent présenter une forme non complètement longitudinale, comme le pilier flexible 1 situé vers l'extrémité 20 sur l'exemple de la figure 2. Dans ce cas, la distance D entre le segment élastique 10 et le segment élastique 11 varie selon la direction de l'axe transversale Y-Y. Afin de combler une telle distance D, l'âme rigide 12 peut présenter une forme dont la longueur selon l'axe longitudinal X-X varie aussi selon la direction de l'axe transversal Y-Y, par exemple une forme de trapèze.

L'ossature flexible 2 telle que décrite ci-dessus est destinée à être agencée sur une gouverne d'un aéronef et tout particulièrement sur une gouverne à géométrie variable 3, représentée de la figure 2 à la figure 6.

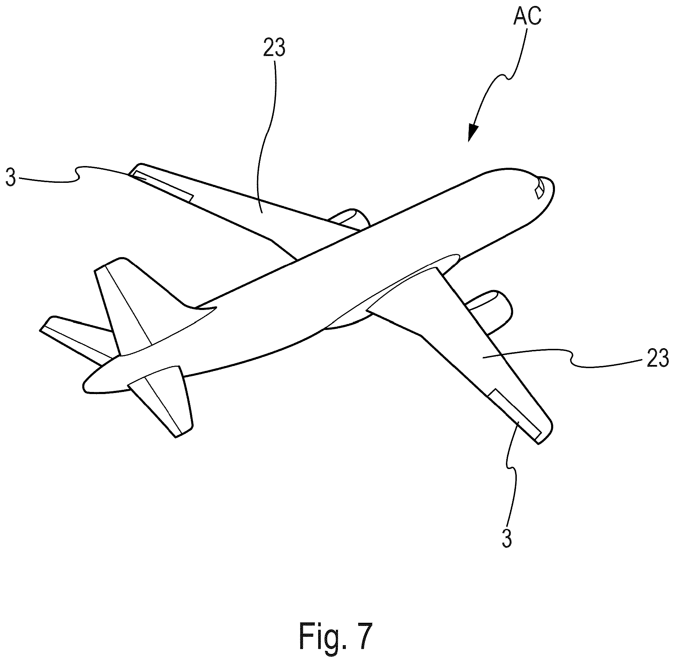

La gouverne à géométrie variable 3 peut présenter une forme profilée, à savoir une forme plus large à une extrémité 19 ouverte, destinée à être montée sur une aile 23 d'un aéronef AC (figure 7), et plus étroite à une extrémité 20 fermée correspondant au bord de fuite de ladite gouverne à géométrie variable 3. En outre, comme expliqué ci-avant, la gouverne à géométrie variable 3 peut comporter une peau supérieure 4 et une peau inférieure 5 délimitant un espace interne E. La peau supérieure 4 comprend une surface interne 21 orientée vers la peau inférieure 5 et la peau inférieure 5 comprend une surface interne 22 orientée vers la peau supérieure 4. En particulier, la peau supérieure 4 et la peau inférieure 5 se rejoignent au niveau de l'extrémité 20 au bord de fuite de la gouverne à géométrie variable 3. Ainsi, l'espace interne E correspond à l'espace compris entre les surfaces internes 21 et 22. C'est un espace fermé au niveau de l'extrémité 20 et ouvert au niveau de l'extrémité 19.

La gouverne à géométrie variable 3 comporte une ossature flexible 2 agencée dans l'espace interne E. En particulier, chaque pilier flexible 1 de l'ossature flexible 2 est fixé, au niveau de ses extrémités selon l'axe longitudinal X-X, à la peau supérieure 4 et à la peau inférieure 5. Plus précisément, chaque pilier flexible 1 est fixé à la surface interne 21 au niveau de son extrémité 8 et à la surface interne 22 au niveau de son extrémité 9. Les piliers flexibles 1 peuvent, par exemple, être fixés par collage.

Dans un mode de réalisation, l'ossature flexible 2 est agencée sur la gouverne à géométrie variable 3 de sorte que l'axe transversal Y-Y des piliers flexibles 1 de ladite ossature flexible 2 corresponde à une direction sensiblement perpendiculaire au bord de fuite de ladite gouverne à géométrie variable 3.

En outre, l'ossature flexible 2 peut être configurée de sorte que la répartition des piliers flexibles 1 soit régulière selon la direction transversale Y-Y. De plus, elle peut être configurée pour que ladite répartition soit également régulière selon un axe horizontal Z-Z correspondant à un axe dont la direction est parallèle à la direction de l'envergure de la gouverne à géométrie variable 3, à savoir la direction définie par sa plus grande longueur parallèlement à son bord de fuite. Par exemple, l'axe horizontal Z-Z correspond à un axe orthogonal à la fois à l'axe transversal Y-Y et à l'axe longitudinal X-X, comme représenté sur la figure 4, la figure 5 et la figure 6.

La gouverne à géométrie variable 3 peut correspondre à un aileron destiné à équiper une aile 23 d'un aéronef AC (figure 7). En particulier, la gouverne à géométrie variable 3 est configurée pour pouvoir être déformée, par exemple via un actionneur, afin de pouvoir prendre différentes formes. La déformation de la gouverne à géométrie variable 3 correspond à la déformation de la peau supérieure 4 et de la peau inférieure 5 et également de l'ossature flexible 2, comme représenté sur la figure 3. En effet, dans cet exemple, la gouverne à géométrie variable 3 présente une forme non déformée, représentée schématiquement par le trait en pointillés 24, qui est destinée à être alignée dans le prolongement de l'aile 23 de l'aéronef AC. Lorsque l'on veut amener la gouverne à géométrie variable 3 dans une position souhaitée, celle-ci peut être déformée, par exemple via un actionneur, afin de lui faire prendre une forme qui l'amènera dans ladite position souhaitée. Une telle déformation est représentée, à titre d'exemple non limitatif, sur la figure 3.

À cet effet, la peau supérieure 4 et la peau inférieure 5 sont configurées pour être déformables. Elles peuvent être réalisées en en matériau métallique ou en matériau composite. De plus, l'ossature flexible 2 est également déformable comme décrit ci-dessus. En particulier, la rigidité en compression et en traction de l'ossature flexible 2 (selon l'axe longitudinal X-X) est telle qu'elle permet à la peau supérieure 4 et à la peau inférieure 5 de ne pas s'écraser l'une contre l'autre lors de la déformation issue des efforts aérodynamiques. En outre, la faible rigidité en cisaillement de l'ossature flexible 2 (selon l'axe transversal Y-Y) facilite la déformation desdites peau supérieure 4 et peau inférieure 5.

Par ailleurs, la gouverne à géométrie variable 3 est destinée à être agencée sur un aéronef AC. En particulier, l'aéronef AC comporte deux ailes 23 pourvues d'au moins une gouverne à géométrie variable 3 sur chaque aile 23. Les gouvernes à géométrie variables 3 sont agencées au niveau du bord de fuite des ailes 23, comme représenté sur la figure 3 et la figure 7.

Le pilier flexible 1 faisant partie de l'ossature flexible 2 équipant la gouverne à géométrie variable 3 telle que décrit ci-dessus, présente de nombreux avantages. En particulier :
- il permet d'obtenir un support apte à transmettre des efforts entre ses extrémités en ne subissant qu'une très faible déformation selon son axe longitudinal tout en autorisant des déformations importantes selon l'axe transversal ;
- il permet d'obtenir une ossature flexible 2 qui est facilement adaptable à tout type de corps creux déformable présentant des formes variées, en particulier des gouvernes pour aéronef ;
- il permet d'obtenir une ossature flexible 2 dont les propriétés mécaniques, notamment élastiques, sont adaptables en fonction des déformations souhaitées ;
- il permet d'obtenir une ossature flexible 2 dont les propriétés élastiques peuvent varier d'un endroit à l'autre de ladite ossature flexible 2, par exemple en changeant la répartition des piliers flexibles 1 ou en changeant la forme ou la composition desdits piliers flexibles 1.

## Revendications

1. Ossature flexible pour une gouverne à géométrie variable , la gouverne à géométrie variable étant pourvue d'une peau supérieure (4) et d'une peau inférieure (5), ladite ossature flexible (2) comprenant une pluralité de piliers flexibles (1), chaque pilier flexible (1) comportant au moins un élément élastique (6) d'une forme allongée dans une direction d'un axe longitudinal (X-X), l'élément élastique (6) comprenant au moins un premier segment élastique (10), un deuxième segment élastique (11) et une âme rigide (12) agencée entre le premier segment élastique (10) et le deuxième segment élastique (11), chaque pilier flexible (1) étant configuré pour être agencé entre la peau supérieure (4) et la peau inférieure (5) de sorte que l'élément élastique (6) de chaque pilier flexible (1) soit apte à être fixé à la peau supérieure (4) à une première extrémité (8) de chaque pilier flexible (1) et soit apte à être fixé à la peau inférieure (5) à une deuxième extrémité (9) de chaque pilier flexible (1), chaque pilier flexible (1) présentant une rigidité en compression et en traction selon l'axe longitudinal (X-X) du pilier flexible (1) qui est supérieure à une rigidité en cisaillement du pilier flexible (1) selon un axe transversal (Y-Y) du pilier flexible (1), la pluralité de piliers flexibles (1) étant destinée à être régulièrement répartie dans un espace interne (E) de la gouverne à géométrie variable (3), l'espace interne (E) étant délimité par la peau supérieure (4) et la peau inférieure (5),
**caractérisée en ce que** l'âme rigide (12) de chacun des piliers flexibles (1) comble une distance (D) selon l'axe longitudinal (X-X) entre le premier segment élastique (10) et le deuxième segment élastique (11).

2. Ossature flexible selon la revendication 1,
caractérisée en ce moins le premier segment élastique (10) et/ou le deuxième segment élastique (11) est constitué d'un matériau élastique incompressible.

3. Ossature flexible selon l'une des revendications 1 et 2,
**caractérisée en ce qu'**au moins le premier segment élastique (10) et/ou le deuxième segment élastique (11) comprend au moins deux tronçons élastiques (13, 14, 15, 16) et au moins une plaque métallique (17, 18) empilés selon l'axe longitudinal (X-X), la ou les plaques métalliques (17, 18) étant intercalées entre deux tronçons élastiques (13, 14, 15, 16).

4. Ossature flexible selon l'une quelconque des revendications 1 à 3, **caractérisée en ce que** chaque pilier flexible (1) présente une section transversale de forme carrée.

5. Ossature flexible selon l'une quelconque des revendications 1 à 3, **caractérisée en ce que** chaque pilier flexible (1) présente une section transversale de forme rectangulaire pourvue d'une longueur destinée à s'étendre selon la direction d'une envergure de la gouverne à géométrie variable (3) sur laquelle il est destiné à être fixé.

6. Gouverne à géométrie variable (3) pourvue d'une peau supérieure (4) et d'une peau inférieure (5) destinée à être agencée sur une aile (23) d'un aéronef (AC),
**caractérisée en ce qu'**elle comporte une ossature flexible (2) selon l'une quelconque des revendications 1 à 5 agencée entre la peau supérieure (4) et la peau inférieure (5).

7. Aéronef (AC),
**caractérisé en ce qu'**il est équipé d'au moins une gouverne à géométrie variable (3) selon la revendication 6, au moins sur l'une de ses ailes (23).

## Patentansprüche

1. Flexibles Gerüst für ein Ruder mit variabler Geometrie, wobei das Ruder mit variabler Geometrie mit einer oberen Haut (4) und einer unteren Haut (5) versehen ist, wobei das flexible Gerüst (2) eine Vielzahl von flexiblen Pfosten (1) umfasst, wobei jeder flexible Pfosten (1) mindestens ein elastisches Element (6) mit einer in Richtung einer Längsachse (X-X) länglichen Form aufweist, wobei das elastische Element (6) mindestens ein erstes elastisches Segment (10), ein zweites elastisches Segment (11) und einen starren Kern (12) umfasst, der zwischen dem ersten elastischen Segment (10) und dem zweiten elastischen Segment (11) angeordnet ist, wobei jeder flexible Pfosten (1) konfiguriert ist, um zwischen der oberen Haut (4) und der unteren Haut (5) angeordnet zu werden, so dass das elastische Element (6) jedes flexiblen Pfostens (1) in der Lage ist, an der oberen Haut (4) an einem ersten Ende (8) jedes flexiblen Pfostens (1) befestigt zu werden, und in der Lage ist, an der unteren Haut (5) an einem zweiten Ende (9) jedes flexiblen Pfostens (1) befestigt zu werden, wobei jeder flexible Pfosten (1) eine Druck- und Zugsteifigkeit entlang der Längsachse (X-X) des flexiblen Pfostens (1) aufweist, die größer ist als eine Schubsteifigkeit des flexiblen Pfostens (1) entlang einer Querachse (Y-Y) des flexiblen Pfostens (1), wobei die Vielzahl flexibler Pfosten (1) dazu bestimmt ist, regelmäßig in einem Innenraum (E) des Ruders mit variabler Geometrie (3) verteilt zu sein, wobei der Innenraum (E) durch die obere Haut (4) und die untere Haut (5) begrenzt ist, **dadurch gekennzeichnet, dass** der starre Kern (12) jedes der flexiblen Pfosten (1) einen Abstand (D) entlang der Längsachse (X-X) zwischen dem ersten elastischen Segment (10) und dem zweiten elastischen Segment (11) ausfüllt.

2. Flexibles Gerüst nach Anspruch 1,
**dadurch gekennzeichnet, dass** zumindest das erste elastische Segment (10) und/oder das zweite elastische Segment (11) aus einem nicht komprimierbaren elastischen Material besteht.

3. Flexibles Gerüst nach einem der Ansprüche 1 und 2,
**dadurch gekennzeichnet, dass** zumindest das erste elastische Segment (10) und/oder das zweite elastische Segment (11) mindestens zwei elastische Abschnitte (13, 14, 15, 16) und mindestens eine Metallplatte (17, 18) umfasst, die entlang der Längsachse (X-X) gestapelt sind, wobei die Metallplatte(n) (17, 18) zwischen zwei elastischen Abschnitten (13, 14, 15, 16) angeordnet ist (sind).

4. Flexibles Gerüst nach einem der Ansprüche 1 bis 3,
**dadurch gekennzeichnet, dass** jeder flexible Pfosten (1) einen quadratischen Querschnitt aufweist.

5. Flexibles Gerüst nach einem der Ansprüche 1 bis 3,
**dadurch gekennzeichnet, dass** jeder flexible Pfosten (1) einen rechteckigen Querschnitt aufweist, versehen mit einer Länge, die dazu bestimmt ist, sich in Richtung einer Spannweite des Ruders mit variabler Geometrie (3) zu erstrecken, an dem er befestigt werden soll.

6. Ruder mit variabler Geometrie (3), versehen mit einer oberen Haut (4) und einer unteren Haut (5), die dazu bestimmt ist, an einem Flügel (23) eines Luftfahrzeugs (AC) angeordnet zu werden,
**dadurch gekennzeichnet, dass** es ein flexibles Gerüst (2) nach einem der Ansprüche 1 bis 5 umfasst, das zwischen der oberen Haut (4) und der unteren Haut (5) angeordnet ist.

7. Luftfahrzeug (AC),
**dadurch gekennzeichnet, dass** es mit mindestens einem Ruder mit variabler Geometrie (3) nach Anspruch 6 zumindest an einem seiner Flügel (23) ausgestattet ist.

## Claims

1. A flexible frame of a variable geometry flight control surface, the variable geometry flight control surface including an upper skin (4) and a lower skin (5), said flexible frame (2) including a plurality of flexible pillars (1), each flexible pilar (1) comprising at least one elastic element (6) having an elongate shape in the direction of a longitudinal axis (X-X), the elastic element (6) comprises at least a first elastic segment (10), a second elastic segment (11) and a rigid core (12) disposed between the first elastic segment (10) and the second elastic segment (11), each flexible pillar (1) being configured to be disposed between the upper skin (4) and the lower skin (5) so that the elastic element (6) of each flexible pillar (1) can be fixed to the upper skin (4) at a first end (8) of each flexible pillar (1) and can be fixed to the lower skin (5) at a second end (9) of each flexible pillar (1), each flexible pillar (1) having a compressive and a tensile rigidity along the longitudinal axis (X-X) of the flexible pillar that is greater than a shear rigidity of the flexible pillar along a transverse axis (Y-Y) of the flexible pillar (1), the plurality of flexible pillars (1) being intended to be regularly distributed in an internal space (E) of the variable geometry flight control surface (3), the internal space (E) being delimited by the upper skin (4) and the lower skin (5),
wherein the rigid core (12) of each of the flexible pillars (1) occupies a distance (D) along the longitudinal axis (X-X) between the first elastic segment (10) and the second elastic segment (11).

2. A flexible frame as claimed in claim 1,
wherein at least the first elastic segment (10) and/or the second elastic segment (11) is or are constituted of an incompressible elastic material.

3. A flexible frame as claimed in any one of claims 1 and 2,
wherein at least the first elastic segment (10) and/or the second elastic segment (11) comprise(s) at least two elastic sections (13,14,15,16) and at least one metal plate (17,18) stacked along the longitudinal axis (X-X), the metal plate or plates (17,18) being interleaved between two elastic sections (13,14,15,16).

4. A flexible frame as claimed in any one of claims 1 to 3,
wherein each flexible pilar (1) has a cross-section of square shape.

5. A flexible frame as claimed in any one of claims 1 to 3,
wherein each flexible pillar (1) has a cross-section of rectangular shape with a length intended to extend in the direction of a span of the variable geometry flight control surface (3) in which it is intended to be fixed.

6. A variable geometry flight control surface with an upper skin (4) and a lower skin (5) intended to be disposed on a wing (23) of an aircraft (AC),
wherein it includes a flexible frame (2) according to either one of claims 1 or 5 disposed between the upper skin (4) and the lower skin (5).

7. An aircraft,
wherein it is equipped with at least one variable geometry flight control surface (3) as claimed in claim 3 on at least one of its wings (23).
